# EUROPEAN PATENT SPECIFICATION

(11) **EP 3 261 236 B1**
(45) Date of publication and mention of the grant of the patent: **20.05.2020**
(21) Application number: 15882569.5
(22) Date of filing: 18.02.2015
(51) Int. Cl.: H02K 41/03, H02K 3/28

(54) **LINEAR MOTOR**
LINEARMOTOR
MOTEUR LINÉAIRE

(43) Date of publication of application: 27.12.2017
(73) Proprietor: Hitachi, Ltd., Tokyo 100-8280 (JP)
(72) Inventor: HASEGAWA Yu, Tokyo 100-8280 (JP); AOYAMA Yasuaki, Tokyo 100-8280 (JP)
(74) Representative: MERH-IP Matias Erny Reichl Hoffmann Patentanwälte PartG mbB
(86) International application number: PCT/JP2015/054354
(87) International publication number: WO 2016/132465

(56) References cited:
- WO-A1-2013/047610
- WO-A1-2013/047610
- WO-A1-2014/065308
- WO-A1-2014/065308
- JP-A- H11 262 236
- JP-A- 2014 504 129
- US-A1- 2004 108 402

## Description

### Technical Field

The present invention relates to a linear motor.

### Background Art

A linear motor is variously used. As an example, PTL 1 discloses a linear motor including stators provided in parallel in the horizontal direction to which a plurality of permanent magnets is fixed and a mover formed by winding armature winding around an armature core having right and left teeth.

In the linear motor described in PTL 1, regarding the right and left teeth of the armature core, the number of teeth on one side is assumed to be N (odd integer, multiple of three) and the number of magnetic poles of the permanent magnets facing to the N teeth is assumed to be P (even integer equal to or more than two) . The positions of the permanent magnets in the moving direction provided on the right and left stators are shifted by δ = ((- P) × 1/2 + N) × P/N × 180 degree from each other in the electric angle. The positions of the armature windings in the moving direction are also shifted by M = (- P) × 1/2 + N slot from each other. Accordingly, when the right and left armature windings are connected in parallel, copper loss and a viscous braking force caused by a circulating current in the armature winding can be eliminated. PTL 2 discloses a device for winding, at high speed, a yarn onto a rotating support and comprising a yarn delivery system, displaced so as to undergo a to-and-fro movement parallel to the surface of said support with rapid deceleration. In PTL 3 a linear motor is shown, sharing of effective magnetic fluxes between the magnetic poles adjacent to each other, and decreasing a magnetic attractive force acting between a mover and an armature, and a linear motor drive system. PTL 4presents a linear motor, consisting of right and left parallel stators which sequentially arranges a plurality of permanent magnets in different poles and a rotor coupling mechanically the divided core. PTL 5 discloses an actuator which is provided with magnet units, a coil unit having a plurality of c-shaped cores, and a plurality of coils wound around the plurality of c-shaped cores. Citation List

### Patent Literature

PTL 1: JP 2003-134790 A
PTL 2: US 2004/108402 A1
PTL 3: WO 2014/065308 A1
PTL 4: JP Hll 262236 A
PTL 5: WO2013/047610 A1

### Summary of Invention

### Technical Problem

In PTL 1 described above, it is necessary to previously determine arrangement of left and right armature windings in each phase corresponding to positions of right and left permanent magnets fixed to a stator. However, for example, when a support of the mover is provided between the armatures or when the movers respectively having different phases are included, intervals of the movers and the armatures are different for each device. Therefore, there is a problem in that a circulating current in the armature winding is generated in a case where the armature windings are connected in parallel.

The present invention has been made in consideration of the above points. A purpose of the present invention is to provide a high-efficient linear motor which can prevent a circulating current caused by a phase difference between windings at the time of parallel connection and reduce copper loss and a viscous braking force when the plural linear motors are connected regardless of phase relation in a magnetic pole including an armature core and a permanent magnet.

### Solution to Problem

The features of the present invention to solve the above problems is, for example, as follows.

A linear motor includes a mover including a plurality of permanent magnets arranged in a state where poles are alternately arranged in a driving direction and an armature unit including a plurality of armatures arranged in the driving direction with predetermined intervals. The armature includes first magnetic pole teeth and second magnetic pole teeth arranged on surfaces opposed to both surfaces of the permanent magnet across a magnetic gap, an armature core for connecting the first magnetic pole tooth to the second magnetic pole tooth, and armature windings respectively wound around the first magnetic pole tooth and the second magnetic pole tooth. When it is assumed that the number of phases of a current for driving the linear motor be R (integer equal to one or more), the number of armatures included in the armature unit be S (integer equal to one or more), the number of coupled linear motors driven by power supplied from a power converter be N (integer equal to or more than two), the number of all the armatures in phase be H = N*S/R, a first series wire connection in which armature windings wound around the first magnetic pole teeth of the H in-phase armatures are connected in series and a second series wire connection in which armature windings wound around the second magnetic pole teeth of the H in-phase armatures are connected in series are formed. The first series wire connection and the second series wire connection are connected in parallel in phase.

### Advantageous Effects of Invention

According to present invention, a high-efficient linear motor can be provided which can prevent a circulating current caused by a phase difference between magnetic fluxes for interlinking with each winding at the time of parallel connection and reduce copper loss and a viscous braking force when the plural linear motors are connected. A problem, a structure, and an effect other than the above are described in the embodiments below.

### Brief Description of Drawings

[FIG. 1] FIG. 1 is a perspective diagram of a first embodiment of a linear motor according to the present invention.
[FIG. 2] FIG. 2 is a sectional view of the linear motor in FIG. 1 cut along a Y-Z plane surface.
[FIG. 3] FIG. 3 is a sectional view of the linear motor in FIG. 1 cut along an X-Y plane surface.
[FIG. 4] FIG. 4 is a diagram of a method for connecting windings according to the first embodiment.
[FIG. 5] FIG. 5 is a diagram to describe a phase difference between induced electromotive force waveforms.
[FIG. 6] FIG. 6 is a perspective diagram of a second embodiment of the linear motor according to the present invention.
[FIG. 7] FIG. 7 is a sectional view of the linear in FIG. 6 cut along a Y-Z plane surface.

### Description of Embodiments

Embodiments of the present invention are described below with reference to the drawings. The following description indicates a specific example of the scope of the present invention, and the present invention is not limited to the following description. The present invention can be variously changed and amended by those skilled in the art without departing from the scope of the technical idea disclosed herein. Also, in all the figures to describe the present invention, the components having the same function are denoted with the same reference numeral, and the repeated description on the above components may be omitted.

### First embodiment

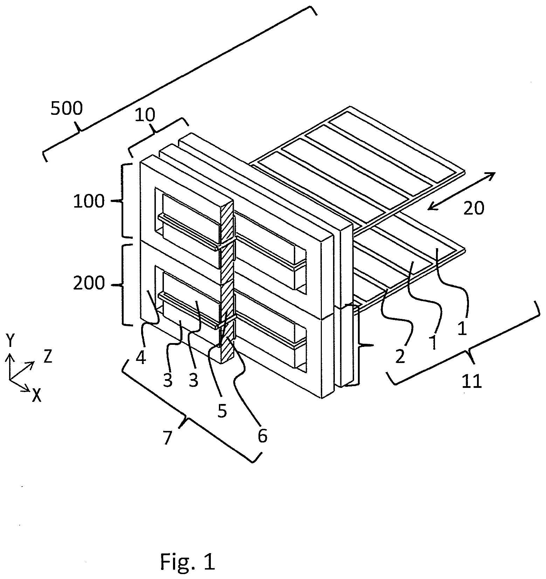

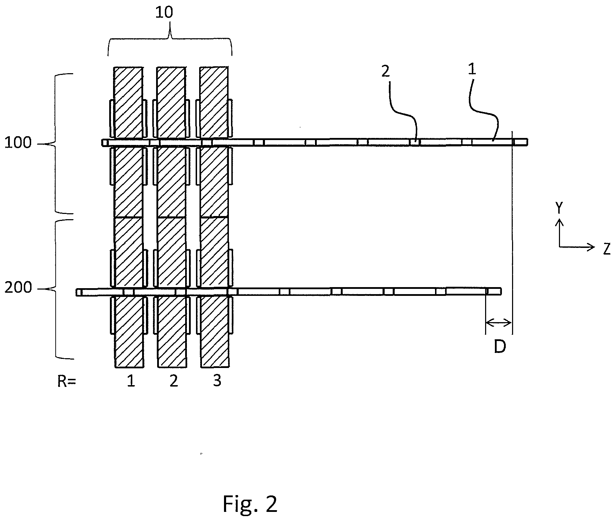

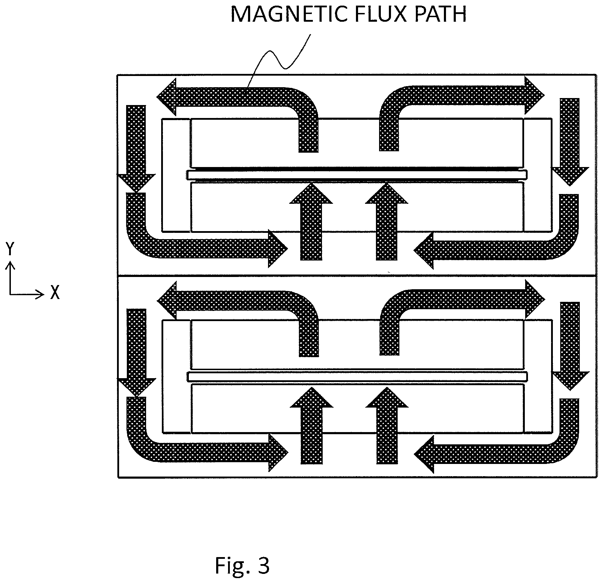

A first embodiment of a linear motor according to the present invention is illustrated in FIGS. 1 to 3. FIG. 1 is a perspective diagram of one embodiment of the linear motor according to the present invention, and the linear motor is partially cut along a Y-Z plane surface indicated by hatching for understanding of arrangement of components. FIG. 2 is a sectional view of the linear motor in FIG. 1 cut along a Y-Z plane surface. FIG. 3 is a sectional view of the linear motor in FIG. 1 cut along an X-Y plane surface.

As illustrated in FIGS. 1 to 3, a linear motor unit 500 according to the present embodiment includes two linear motors, i.e., a first linear motor 100 and a second linear motor 200 arranged next to each other. In other words, the first linear motor 100 and the second linear motor 200 are provided adjacent to each other.

Each of the first linear motor 100 and the second linear motor 200 according to the present embodiment includes a mover 11 and an armature unit 10. The armature unit 10 includes S (the number of armatures 7 included in armature unit 10) armatures having the same structure as the armature 7 coaxially arranged adjacent to each other. In other words, the armature unit 10 includes the plurality of armatures arranged in a driving direction with predetermined intervals. In the present embodiment, it is assumed that S = 3 be satisfied.

The mover 11 includes a plurality of permanent magnets 1 and a plate 2 for holding the permanent magnets 1. The permanent magnets 1 are arranged in a driving direction 20 in a state where poles are alternately arranged.

The armature 7 includes first magnetic pole teeth 5 and second magnetic pole teeth 6 disposed to be opposed to the permanent magnet 1 of the mover 11, an armature core 4 which is a magnetic body for connecting the first magnetic pole tooth 5 with the second magnetic pole tooth 6 and forming a magnetic flux path, and armature windings 3 which are wound around the first magnetic pole tooth 5 and the second magnetic pole tooth 6. In other words, the first magnetic pole teeth 5 and the second magnetic pole teeth 6 are arranged on the surfaces opposed to both surfaces of the permanent magnet 1 having a magnetic gap therebetween, and the armature winding 3 is wound around each of the first magnetic pole tooth 5 and the second magnetic pole tooth 6.

The first linear motor 100 and the second linear motor 200 according to the present embodiment are examples for forming a three-phase motor. In the first linear motor 100 and the second linear motor 200, the armature unit 10 and the mover 11 relatively perform linear movement, and the first linear motor 100 and the second linear motor 200 are driven in the Z direction. The position of the permanent magnet of the mover 11 in the first linear motor 100 in the driving direction is shifted from that in the second linear motor 200 with phase difference D intervals. When the movers 11 in the first linear motor 100 and the second linear motor 200 are driven as being interlocked with each other, a thrust pulsation component caused by a magnetic attraction force generated between the permanent magnet 1 and the armature 7 can be offset. The armature units 10 of the first linear motor 100 and the second linear motor 200 are laminated in the Y direction as illustrated in FIGS. 1 to 3 and have a partially common magnetic flux path on the XY surface. In other words, in the first linear motor 100 and the second linear motor 200, the armatures 7 have a common magnetic flux path. Accordingly, since magnetic fluxes offset each other in a common part of the magnetic path, a cross-sectional area can be narrower. Therefore, the motor can be miniaturized by shortening the dimension in the Y direction.

In the present embodiment, the first magnetic pole teeth 5 and the second magnetic pole teeth 6 of the three armatures 7 included in the armature unit 10 are arranged so that phases are shifted by 120 degrees at an electric angle to form the three-phase first linear motor 100 and second linear motor 200. Similarly, when it is assumed that the number of phases of a current to drive the linear motor be R (integer of one or more), a R-phase drive linear motor can be formed by shifting the phases of the currents by 360°/R. It is assumed that the number of coupled linear motors driven by power supplied from one or more power converters be N (integer equal to or more than two), and it is assumed that the number of all the armatures in phase be obtained by H = N*S/R. In the present embodiment, it is assumed that R = 3, S = 3, and N = 2, and H = 2 is satisfied.

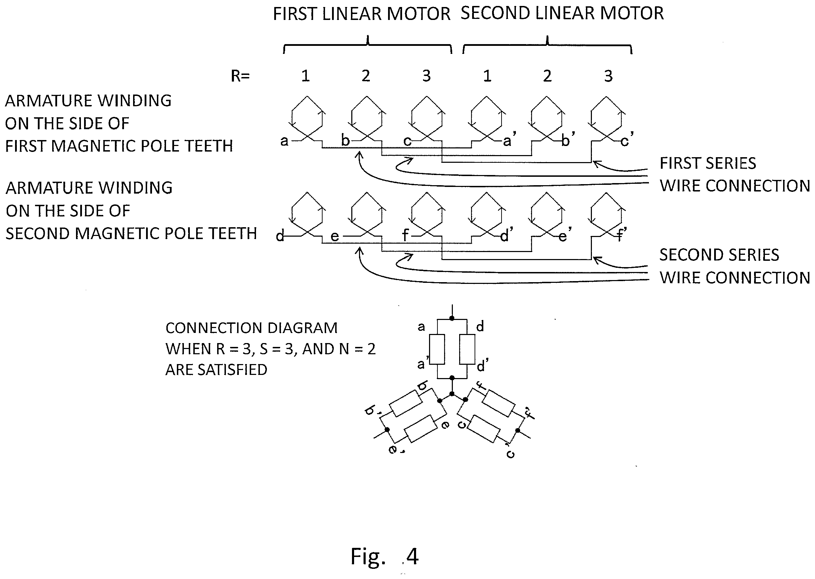

A linear motor unit 500 includes a first series wire connection in which the armature windings 3 wound around the first magnetic pole teeth 5 of the H armatures 7 having the same phase are connected in series and a second series wire connection in which the armature windings 3 wound around the second magnetic pole teeth 6 of the H armatures having the same phase. The series wire connections are connected in parallel in phase. A connection diagram of the present embodiment is illustrated in FIG. 4. In each phase, two series wire connections are connected in parallel in an electric circuit. In other words, the first series wire connection in which the armature windings wounded around the first magnetic pole teeth of the H in-phase armatures are connected in series and the second series wire connection in which the armature windings wound around the second magnetic pole teeth of the H in-phase armatures are connected in series are formed, and the first series wire connection and the second series wire connection are connected in parallel in phase.

In the linear motor unit 500 having the above structure, when each of the movers 11 of the first linear motor 100 and the second linear motor 200 is moved in the driving direction (Z direction), flux linkage periodically flows from the permanent magnet 1 to each armature winding 3, and an induced electromotive force according to a change in the amount of the flux linkage is generated.

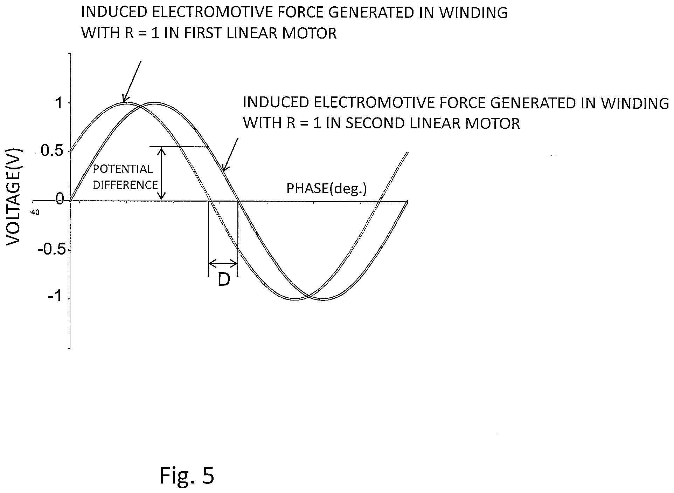

When there is a phase difference D between the movers 11, an induced electromotive force generated in each armature 7 is different according to the positional relation between the armature 7 and the permanent magnet 1 in each of the first linear motor 100 and the second linear motor 200. Therefore, by using a connection method for connecting the armature windings in each linear motor, a potential difference illustrated in FIG. 5 is generated between the series wire connections of the first linear motor 100 and the second linear motor 200, and a circulating current flows in a parallel connecting part.

In one embodiment of the present invention, in the same armatures, the amounts of the flux linkages flowing into the first magnetic pole tooth and the second magnetic pole tooth having the same permanent magnet therebetween are equal to each other. By using that, the potential of the induced electromotive force is averaged in each phase by making a connection illustrated in FIG. 4 to eliminate the potential difference.

Therefore, the circulating current does not flow into the parallel connecting part in principle, and copper loss caused by the circulating current is eliminated so that motor efficiency is improved. Also, since the circulating current generates a thrust in a direction opposite to the driving direction and causes a viscous braking force in proportion to the speed. Therefore, according to the present invention, improvement in motor responsiveness realized by reducing the viscous braking force is expected.

### Second embodiment

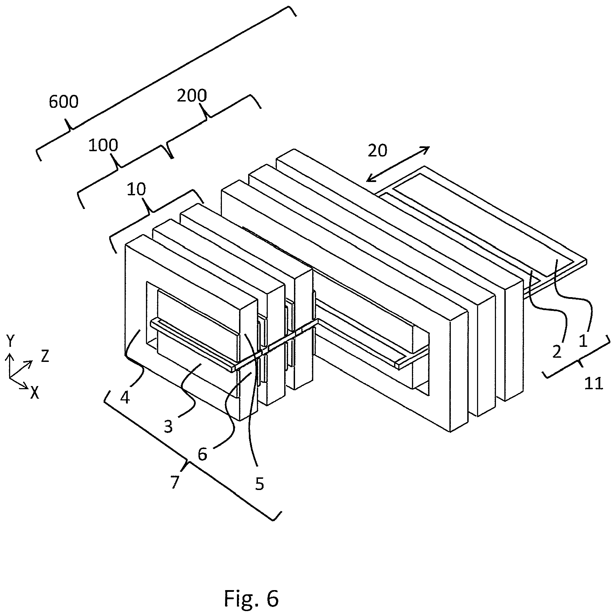

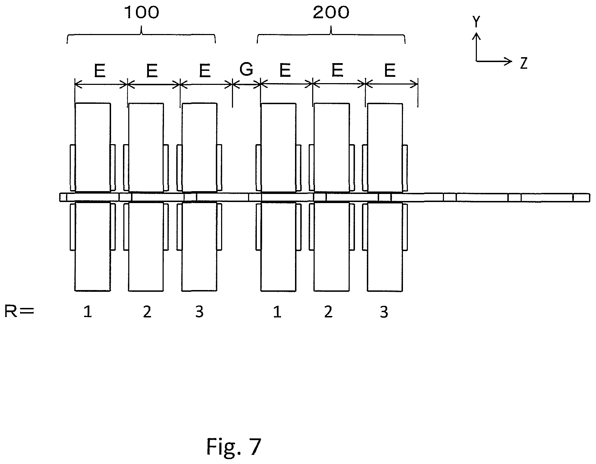

A second embodiment of a linear motor according to the present invention is illustrated in FIGS. 6 and 7. FIG. 6 is a perspective diagram of one embodiment of the linear motor according to the present invention. FIG. 7 is a sectional view of the linear motor in FIG. 6 cut along a Y-Z plane surface.

A linear motor unit 600 according to the present embodiment illustrated in FIGS. 6 and 7 includes a first linear motor 100 and a second linear motor 200. The structures of the first linear motor 100 and the second linear motor 200 are substantially similar to those of the first embodiment. Therefore, detailed description is omitted.

The present embodiment illustrated in FIGS. 6 and 7 includes the same number of armatures as those in the structure, which satisfies R = 3, S = 3, and N = 2, described in the first embodiment. However, the mover 11 is used by the first linear motor 100 and the second linear motor 200 in common. Also, in the first linear motor 100 and the second linear motor 200, the armatures 7 have a common magnetic flux path. Also, the armatures 7 in the first linear motor 100 and the second linear motor 200 are provided adjacent to each other in the driving direction with intervals E, and the armatures 7 form the armature units 10 in each of the first linear motor 100 and the second linear motor 200. However, the armature unit 10 of the first linear motor 100 is apart from that of the second linear motor 200 with an interval G. In other words, the first linear motor 100 and the second linear motor 200 are provided adjacent to each other in the driving direction with an optional interval.

According to the present embodiment, the effect similar to that of the first embodiment can be obtained, and vibration of the mover in the X and Y directions generated at the time of the drive can be reduced by providing a support member of the mover 11 in a space of the phase difference G. Also, by adjusting the phase difference G, thrust pulsation generated in the first linear motor 100 and the second linear motor 200 offset each other and can be reduced.

### Reference Signs List

- 1: permanent magnet
- 2: mover plate
- 3: armature winding
- 4: armature core
- 5: first magnetic pole tooth
- 6: second magnetic pole tooth
- 7: armature
- 10: armature unit
- 20: driving direction
- 100: first linear motor
- 200: second linear motor
- 500: linear motor unit
- 600: linear motor unit

## Claims

1. A linear motor unit comprising a plurality of linear motors, each of the plurality of linear motors comprising:
a mover configured to include a plurality of permanent magnets (1) arranged in a state where poles are alternately arranged in a driving direction; and
an armature unit (10) configured to include a plurality of armatures (7) arranged in the driving direction with predetermined intervals, wherein
the armature (7) includes
first magnetic pole teeth (5) and second magnetic pole teeth (6) arranged on surfaces opposed to both surfaces of a same permanent magnet (1) across a magnetic gap,
an armature core (4) for connecting the first magnetic pole tooth (5) to the second magnetic pole tooth (6), and
armature windings (3) respectively wound around the first magnetic pole tooth (5) and the second magnetic pole tooth (6),
when it is assumed that
the number of phases of a current for driving the linear motor is R, R being an integer equal to one or more,
the number of armatures included in the armature unit (10) is S, S being an integer equal to one or more,
the number of coupled linear motors in a linear motor unit driven by power supplied from a power converter is N, N being an integer equal to or more than two, and
the number of all the armatures in phase be H = N*S/R, **characterised in that**
a first series wire connection in which armature windings (3) wound around the first magnetic pole teeth (5) of the H in-, phase armatures are connected in series and a second series wire connection in which armature windings (3) wound around the second magnetic pole teeth (6) of the H in-phase armatures are connected in series are formed, and
the first series wire connection and the second series wire connection are connected in parallel in phase.

2. A linear motor unit configured by arranging the plurality of linear motors according to claim 1 adjacent to each other, wherein
the armatures (7) have a common magnetic flux path in the plurality of linear motors.

3. A linear motor unit configured by arranging the plurality of linear motors according to claim 1 in a driving direction with optional intervals, wherein
the plurality of linear motors uses the mover in common.

4. A linear motor unit configured by arranging the plurality of linear motors according to claim 1 adjacent to each other in a driving direction with optional intervals, wherein
in the plurality of linear motors, the armatures (7) have a common magnetic flux path, and
the plurality of linear motors uses the mover in common.

## Patentansprüche

1. Linearmotoreinheit, die mehrere Linearmotoren umfasst, wobei jeder der mehreren Linearmotoren Folgendes umfasst:
eine Bewegungsvorrichtung, die konfiguriert ist, mehrere Permanentmagnete (1) zu enthalten, die in einem Zustand angeordnet sind, in dem die Pole in einer Fahrtrichtung abwechselnd angeordnet sind; und
eine Ankereinheit (10), die so konfiguriert ist, dass sie mehrere Anker (7) enthält, die in der Fahrtrichtung mit vorbestimmten Intervallen angeordnet sind, wobei der Anker (7) erste Magnetpolzähne (5) und zweite Magnetpolzähne (6) enthält, die auf Oberflächen angeordnet sind, die beiden Oberflächen eines gleichen Permanentmagneten (1) über einen Magnetspalt gegenüberliegen,
einen Ankerkern (4) zum Verbinden der ersten Magnetpolzähne (5) mit den zweiten Magnetpolzähnen (6) und
Ankerwicklungen (3), die um den ersten Magnetpolzahn (5) bzw. den zweiten Magnetpolzahn (6) gewickelt sind,
dann, wenn angenommen wird, dass
die Zahl der Phasen eines Stroms zum Antreiben des Linearmotors R entspricht, R einer ganzen Zahl entspricht, die größer oder gleich eins ist,
die Zahl der Anker, die in der Ankereinheit (10) enthalten ist, S entspricht, S einer ganzen Zahl entspricht, die größer oder gleich eins ist,
die Zahl gekoppelter Linearmotoren in einer Linearmotoreinheit, die von der Leistung angetrieben wird, die von einem Leistungsumsetzer zugeführt wird, N entspricht, N einer ganzen Zahl entspricht, die größer oder gleich zwei ist, und
die Zahl aller Anker, die sich in Phase befinden H = N × S/R entspricht, **dadurch gekennzeichnet, dass**
eine erste Reihendrahtverbindung, in der Ankerwicklungen (3), die um die ersten Magnetpolzähne (5) der H Anker, die in Phase sind, in Reihe verbunden sind, und eine zweite Reihendrahtverbindung, in der Ankerwicklungen (3), die um die zweiten Magnetpolzähne (6) der H Anker, die in Phase sind, in Reihe verbunden sind, gebildet sind und
die erste Reihendrahtverbindung und die zweite Reihendrahtverbindung parallel in Phase verbunden sind.

2. Linearmotoreinheit, die durch Anordnen der mehreren Linearmotoren nach Anspruch 1 nebeneinander konfiguriert ist, wobei
die Anker (7) in den mehreren Linearmotoren einen gemeinsamen Magnetflusspfad aufweisen.

3. Linearmotoreinheit, die durch Anordnen der mehreren Linearmotoren nach Anspruch 1 in einer Fahrtrichtung mit beliebigen Zwischenräumen konfiguriert ist, wobei
die mehreren Linearmotoren die Bewegungsvorrichtung gemeinsam verwenden.

4. Linearmotoreinheit, die durch Anordnen der mehreren Linearmotoren nach Anspruch 1 nebeneinander in einer Fahrtrichtung mit beliebigen Zwischenräumen konfiguriert ist, wobei
in den mehreren Linearmotoren die Anker (7) einen gemeinsamen Magnetflusspfad aufweisen, und
die mehreren Linearmotoren die Bewegungsvorrichtung gemeinsam verwenden.

## Revendications

1. Unité de moteur linéaire comprenant une pluralité de moteurs linéaires, chacun de la pluralité de moteurs linéaires comprenant :
un élément déplaceur configuré pour inclure une pluralité d'aimants permanents (1) agencés dans un état dans lequel des pôles sont agencés en alternance dans une direction d'entraînement ; et
une unité d'induit (10) configurée pour inclure une pluralité d'induits (7) agencés dans la direction d'entraînement avec des intervalles prédéterminés, dans laquelle l'induit (7) inclut
des premières dents formant pôle magnétique (5) et des secondes dents formant pôle magnétique (6) agencées sur des surfaces opposées aux deux surfaces d'un même aimant permanent (1) à travers un entrefer magnétique,
un noyau d'induit (4) destiné à connecter la première dent formant pôle magnétique (5) à la seconde dent formant pôle magnétique (6), et
des enroulements d'induit (3) respectivement enroulés autour de la première dent formant pôle magnétique (5) et de la seconde dent formant pôle magnétique (6),
quand il est supposé que
le nombre de phases d'un courant d'entraînement du moteur linéaire est R, R étant un entier égal à un ou plus,
le nombre d'induits inclus dans l'unité d'induit (10) est S, S étant un entier égal à un ou plus,
le nombre de moteurs linéaires couplés dans une unité de moteur linéaire entraînés par une puissance alimentée depuis un convertisseur de puissance est N, N étant un entier égal ou supérieur à deux, et
le nombre de tous les induits en phase étant H = N*S/R,
**caractérisée en ce que**
une première connexion filaire en série, dans laquelle des enroulements d'induit (3) enroulés autour des premières dents formant pôle magnétique (5) des induits en phase H sont connectés en série, et une seconde connexion filaire en série, dans laquelle des enroulements d'induits (3) enroulés autour des secondes dents formant pôle magnétique (6) des induits en phase H sont connectés en série, sont formées, et
la première connexion filaire en série et la seconde connexion filaire en série sont connectées en parallèle en phase.

2. Unité de moteur linéaire configurée en agençant la pluralité de moteurs linéaires selon la revendication 1 de manière adjacente les uns aux autres, dans laquelle
les induits (7) ont un trajet de flux magnétique commun dans la pluralité de moteurs linéaires.

3. Unité de moteur linéaire configurée en agençant la pluralité de moteurs linéaires selon la revendication 1 dans une direction d'entraînement avec des intervalles optionnels, dans laquelle la pluralité de moteurs linéaires utilise l'élément déplaceur en commun.

4. Unité de moteur linéaire configurée en agençant la pluralité de moteurs linéaires selon la revendication 1 de manière adjacente les uns aux autres dans une direction d'entraînement avec des intervalles optionnels, dans laquelle
dans la pluralité de moteurs linéaires, les induits (7) ont un trajet de flux magnétique commun, et
la pluralité de moteurs linéaires utilisent l'élément déplaceur en commun.
